# EUROPEAN PATENT APPLICATION

(11) **EP 4 632 842 A1**
(43) Date of publication of application: **15.10.2025**
(21) Application number: 25169026.9
(22) Date of filing: 08.04.2025
(51) Int. Cl.: H01M 4/36, C01G 45/02, H01M 4/50, H01M 4/52, H01M 4/587, H01M 4/13, H01M 4/48, H01M 10/0525, H01M 4/02, C01B 32/00

(54) **NEGATIVE ELECTRODE AND RECHARGEABLE LITHIUM BATTERY INCLUDING SAME**

(30) Priority: 09.04.2024 KR 20240048180
(71) Applicant: SAMSUNG SDI CO., LTD., Yongin-si, Gyeonggi-do 17084 (KR)
(72) Inventor: HAN, Wonchull, 17084 Gyeonggi-do (KR); KO, Inhwan, 17084 Gyeonggi-do (KR)
(74) Representative: Maiwald GmbH

(57) **Abstract**

Disclosed are a negative electrode and a rechargeable lithium battery including the same. The negative electrode includes a current collector; and a and a negative active material including a first negative active material and a crystalline carbon second negative active material at a weight ratio of more than about 0: less than about 100 to about 20:about 80, and the first negative active material including a core including voids and transition metal oxide and an amorphous carbon coating layer on a surface of the core.

## Description

### BACKGROUND

### (a) Field

Embodiments relate to a negative electrode and a rechargeable lithium battery including the same.

### (b) Description of the Related Art

Recently, with the rapid spread of electronic devices that use batteries, e.g., mobile phones, laptop computers, and electric vehicles, a demand for smaller, lighter and relatively high-capacity rechargeable lithium batteries is rapidly increasing. Improving performances of rechargeable lithium batteries has been considered.

Rechargeable lithium batteries include a positive electrode and a negative electrode including an active material capable of intercalating and deintercalating lithium ions, and an electrolyte solution, and electrical energy is produced by oxidation and reduction reactions when lithium ions are intercalated/deintercalated at the positive and negative electrodes.

### SUMMARY

One or more embodiments provide a negative electrode exhibiting excellent initial capacity and cycle-life characteristics.

Another embodiment provides a rechargeable lithium battery including the same.

One or more embodiment provide a negative electrode including a current collector and a negative active material layer including a first negative active material and a crystalline carbon second negative active material at a weight ratio of more than about 0: less than about 100 to about 20:about 80, the first negative active material including a core including voids and transition metal oxide and a carbon coating layer on a surface of the core.

Another embodiment provides a rechargeable lithium battery including the negative electrode; a positive electrode; and an electrolyte.

A negative electrode according to one or more embodiment may exhibit excellent initial capacity and cycle-life characteristic

### BRIEF DESCRIPTION OF THE DRAWINGS

FIG. 1 schematically shows the first negative active material according to one or more embodiments of the present invention.
FIG. 2 to FIG. 5 are cross-sectional views schematically showing rechargeable lithium batteries according to some embodiments of the present invention.

### DETAILED DESCRIPTION

Hereinafter, embodiments are described in detail. However, these embodiments are exemplary, the present invention is not limited thereto and the present invention is defined by the scope of claims.

As used herein, when a definition is not otherwise provided, it will be understood that when an element such as a layer, film, region, or substrate is referred to as being "on" another element, it may be directly on the other element or intervening elements may also be present.

Unless otherwise specified in the specification, expressions in the singular include expressions in plural. Unless otherwise specified, "A or B" may indicate "includes A, includes B, or includes A and B".

As used herein, the term "combination thereof" may include a mixture, a laminate, a complex, a copolymer, an alloy, a blend, or a reactant of constituents.

As used herein, when a definition is not otherwise provided, a particle diameter may be an average particle diameter. Such a particle diameter indicates an average particle diameter (D50) where a cumulative volume is about 50 volume% in a particle size distribution. The average particle diameter (D50) may be measured by a method well known to those skilled in the art, for example, by a particle size analyzer, or by a transmission electron microscopic image, or a scanning electron microscopic image. In some embodiments, a dynamic light-scattering measurement device is used to perform a data analysis, and the number of particles is counted for each particle size range, and from this, the average particle diameter (D50) value may be easily obtained through a calculation. The particle size may be measured by a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50 % standard of particle distribution in the measuring device.

In some embodiments, an average particle diameter may be measured by various techniques, and for example, may be measured by a particle analyzer.

In some embodiments, a thickness may be measured by a SEM or a TEM image for the cross-section, but is not limited thereto, and it may be measured by any techniques, as long as it may measure the thickness in the related arts. The thickness may be an average thickness.

As used herein, soft carbon refers to graphitizable carbon materials and are readily graphitized by heat treatment at a high temperature, e.g., about 2800 °C, and hard carbon refers to non-graphitizable carbon materials and are substantially and slightly not graphitized by heat treatment. The terms soft carbon and hard carbon are well known in the related arts.
In some embodiments, the crystalline carbon and the amorphous carbon may be distinguished through XRD measurement. The crystalline carbon includes natural graphite and artificial graphite. Natural graphite may indicate graphite which may be naturally generated by separating it from minerals, and if measured by XRD, the interplanar spacing (d002) of the (002) plane may be about 3.350 Å to about 3.360 Å. Artificial graphite may indicate graphite manufactured by graphitization, and if (e.g., when) measured by XRD, the interplanar spacing (d002) of the (002) plane may be about 3.355 Å to about 3.365 Å. Meanwhile, the amorphous carbon may have the interplanar spacing (d 002) of the (002) plane of about 3.34 Å or less, if measured by XRD. The XRD may be measured using CuKα ray as a target ray with an X-ray diffraction analyzer (e.g., product name: X'Pert, manufacturer: Malvern Panalytical) and by removing a monochromator to improve a peak density resolution. The measurement condition may be 2θ=10 ° to 80 °, a scan speed (°/S) of 0.044 to 0.089, and a step size (°/step) of 0.013 to 0.039.

A negative electrode according to one or more embodiments provides a negative electrode including a current collector; and a negative active material layer including a first negative active material and a crystalline carbon second negative active material at a weight ratio of more than about 0: less than about 100 to about 20:about 80, the first negative active material including a core including voids and transition metal oxide and an amorphous carbon coating layer on a surface of the core.

In one or more embodiment, a mixing ratio of the first negative active material and the second negative active material may be more than about 0: less than about 100 to about 20:80 by weight ratio, about 1:99 to about 15:85 by weight ratio, or about 5:95 to about 15:85 by weight ratio.

If the mixing ratio of the first negative active material and the second negative active material is within the range, excellent initial capacity and cycle-life characteristics may be exhibited. If an excessive amount of the first negative active material is used, for example, if the ratio of the first negative active material:the second negative active material (the ratio of the first negative active material to the second negative active material) is greater than about 20:80, the effect by using the first negative active material may be obtained, but the battery efficiency may be deteriorated, thereby degrading the utilization of the positive electrode and cycle-life characteristics.

### [First negative active material]

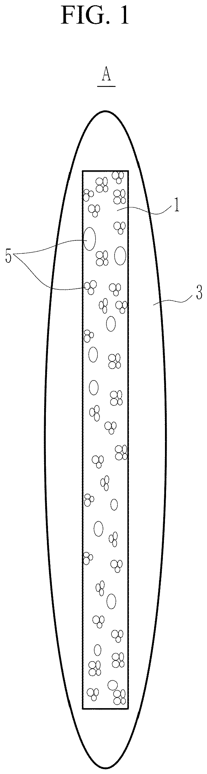

The first negative active material according to one or more embodiment includes a core including voids and transition metal oxide and a carbon coating layer on a surface of the core. In some embodiment, the voids are formed in the core. FIG. 1 schematically shows the structure of the first negative active material (A) and the first negative active material (A) includes the core 1 in which voids 5 are formed and the amorphous carbon coating layer 3. As shown in FIG. 1, the void may be in the form of a single void or may be existed in the form of a cluster of a plurality of voids.

The first negative active material may exhibit high capacity, without volume expansion during charging and discharging, and very high energy density.

In the first negative active material, the core includes the transition metal oxide and includes voids.

In one or more embodiments, the transition metal of the transition metal oxide may be Mn, Fe, Ni, V, Co, or a combination thereof.

The transition metal oxide may be MnOₓ (x is about 1 to about 2), CoO_{y} (y is about 1 to about 1.33), NiO_{y} (y is about 1 to about 1.33), FeO_{y} (y is about 1 to about 1.33), V₃O₅, V₂O₅, V₂O₃, or a combination thereof, in one or more embodiments, it may be MnOₓ (x is about 1 to about 2).

The transition metal oxide may have a shape of nano wire, nano rod, or a combination thereof. The transition metal oxide having these shapes, may have larger specific surface area, compared to spherical shapes such as particle shapes, which is advantageous for lithium storage reactions, but the large specific surface area causes to exhibit low stability. In one or more embodiments, the amorphous carbon coating layer is formed on the surface of the transition metal oxide to enhance safety, thereby providing resistance to the loss of active site due to the volume changes, and improving the inherently low conductivity of the oxide, so that the lithium storage reaction may be effectively utilized.

The transition metal oxide having the spherical shape, e.g., particle shape, has a small specific surface area and also aggregation of particles occurs, leading an extreme reduction in specific surface area, and thus, the improvements in stability by forming amorphous carbon coating layer is insignificant. If the amorphous carbon is formed on spherical transition metal oxide, the aggregation of particles may create areas that do not come into contact with the amorphous carbon coating layer to decrease the battery efficiency and to occur severe deterioration during charging and discharging. Furthermore, the transition metal oxide having the spherical shape has a small contact area with the current collector, thereby easily leading to separation during charging and discharging, and readily deteriorating active areas during the battery operation.

The first negative active material according to one or more embodiments include the core including the transition metal oxide in the form of a nano wire or nano rod and the amorphous carbon coating layer on the surface of the core, and thus, more excellent safety may be exhibited and the improvement in capacity may be effectively realized.

In one or more embodiments, the nano wire or the nano rod may have a length of about 400 nm to about 30000 nm, about 400 nm to about 20000 nm, about 400 nm to about 10000 nm, or about 400 nm to about 3000 nm.

The length represents a size of the long axis (e.g., major axis) of the nano wire or the nano rod and represents an average length. The length may be measured through transmission electron microscope or scanning electron microscope.

A porosity of the first negative active material may be about 15 % to about 40 %, about 20 % to about 35 %, about 15 % to about 35 %, about 15 % to about 30 %, or about 15 % to about 25 %. If the porosity of the first negative active material is within the range, the resistance to the volume expansion owing to the lithium storage may be enhanced, and the reaction speed with lithium due to the large specific surface area may be improved.

In one or more embodiments, the porosity may be measured by a mercury intrusion porosimetry, e.g., ISO 15901 mercury intrusion porosimetry (e.g., International Organization for Standardization (ISO) 15901-1:2016 and/or ISO 15901-2:2022, the entire content of each of which is hereby incorporated by reference).
An average size of the voids may be about 0.1 nm to about 10 nm, about 1 nm to about 10 nm, or about 5 nm to about 10 nm.

The inclusion of voids in the first negative active material may act as a buffer for absorbing the volume expansion of the first negative active material which may be occurred during charge and discharge. This means that the first negative active material does not cause the shortcoming related to the volume expansion during charge and discharge.

In one or more embodiments, the voids may be only formed in the core of the first negative active material and may not be formed in the amorphous carbon coating layer. For example, in the first negative active material, the amorphous carbon coating layer positioned on the surface of the core may be a dense layer. In one or more embodiments, the dense layer indicates a layer in which the voids are not substantially formed, and the amorphous carbon coating layer which is such a dense layer may have a porosity of about 1 % or less. If the amorphous carbon coating layer is dense layer, even though the volume expansion of the inside particles has occurred, the shape may be well maintained and passage for transferring electrons may be well maintained.

In one or more embodiments, a thickness of the amorphous carbon coating layer may be about 1 nm to about 100 nm, about 5 nm to about 100 nm, or about 10 nm to about 50 nm. If the thickness of the amorphous carbon coating layer is within the range, the amorphous carbon coating layer may act as the more effective passage for transferring electrons, thereby well transferring electrons to the inside particles.

In one or more embodiments, the amorphous carbon coating layer is a coating layer consisting of carbon and the carbon is amorphous. Since the carbon, of which the coating layer is formed, is amorphous, it exhibits anisotropic electrical conductivity and has a dense structure compared to crystalline, and thus, it may have an advantage as pathway for electron transfer. If the coating layer is formed of carbon, which is crystalline, the uniformity of the coating layer may be deteriorated and the conductivity varies depending on the direction of the crystal grains, causing non-uniformity of the reaction.

The carbon of which the coating layer is formed may be obtained by carbonizing a polymer.

In one or more embodiments, an amount of the transition metal oxide may be, based on 100 wt% of the first negative active material, about 85 wt% to about 99 wt%, about 90 wt% to about 96 wt%, or about 93 wt% to about 96 wt%. The amount of the transition metal oxide is within the range may allow an increased lithium storage per weight or volume of the negative active material.

An amount of the amorphous carbon coating layer may be, based on 100 wt% of the first negative active material, about 1 wt% to about 15 wt%, about 4 wt% to about 15 wt%, about 7 wt% to about 15 wt%, about 4 wt% to about 10 wt%, or about 4 wt% to about 7 wt%.

### [Second negative active material]

In one or more embodiments, the second negative active material may be crystalline carbon and may be unspecified shaped, sheet shaped, flake shaped, spherical shaped, or fiber shaped natural graphite or artificial graphite.

### <Preparation of first negative active material>

The first negative active material is prepared by the following procedures. A transition metal oxide or a transition metal hydroxide is mixed with a carbon compound to prepare a mixture. A mixing ratio of the transition metal oxide or the transition metal hydroxide, and the carbon compound may be adjusted in order to have an amount of the transition metal oxide of about 85 wt% to about 99 wt% and an amount of the carbon of about 1 wt% to about 15 wt% in the final first negative active material.

The transition metal oxide or the transition metal hydroxide may be MnO₂, MnOOH, Fe₂O₃, FeOOH, NiOOH, Ni (OH)₂, VO₂, V₃O₅, V₂O₅, V₂O₃, Co(OH)₂, CoOOH, Co₃O₄, or a combination thereof, and in one or more embodiments, it may be MnO₂, MnOOH, or a combination thereof.

The transition metal oxide or the transition metal hydroxide may have a shape of nano wire, nano rod, or a combination thereof. Such transition metal oxide or transition metal hydroxide may be the commercially available products having these shapes or may be prepared to have these shapes, e.g., by a hydrothermal synthesis, or the like. The preparation such as hydrothermal synthesis or the like will be widely understood in the related art, and thus, the detailed description thereon will be not disclosed in the present disclosure.

The carbon compound may be any material which may well coat the transition metal oxide or the transition metal hydroxide, may form a dense polymer thin layer, effectively conductive path of lithium ions, and bind well to the surface of the transition metal oxide or the transition metal hydroxide. Examples of the carbon compound may be at least one of dopamine, sucrose, glucose, polyvinyl pyrrolidone (PVP) or a non-ionic surfactant. The non-ionic surfactant may be polyoxyethylene sorbitan monooleate (Trademark: Tween80), fatty acid alcohol ether, alkyl polyglucoside, or the like, but is not limited thereto.

The mixing may be carried out in a solvent. The solvent may be water or a mixture of water and an alcohol. The alcohol may be methanol, ethanol, propanol, isopropanol, or a combination thereof. If the mixture of the alcohol and water is used as the solvent, an amount of the alcohol may be about 1 wt% to about 10 wt% based on 100 wt% of the mixture.

In one or more embodiments, the mixing may be carried out by further utilizing a buffer according to the type of the carbon compound. For example, if dopamine is used as the carbon compound, the buffer may be further utilized. The buffer may be tris(hydroxymethyl)aminomethane, phosphate buffered saline (PBS), morpholinopropanesulfonic acid, or a combination thereof. If the buffer is utilized, an amount of the buffer used may be appropriately adjusted in order to reach a pH of the mixture to be about 8 to about 9.

The mixing may be carried out at a room temperature or may be carried out a low temperature depending on the type of the carbon compound used. For example, if the carbon compound is dopamine, polyvinyl pyrrolidone, or the non-ionic surfactant, it may be carried out at a room temperature or a low temperature, e.g., about 20 °C to about 45 °C.

In another embodiments, if the carbon compound is sucrose or glucose, it may be carried out at a room temperature or low temperature, or it may be carried out by hydrothermal synthesis including heating. If it is carried out under the hydrothermal synthesis, it may be carried out at about 180° C to about 300 °C, about 200 °C to about 300 °C or about 250 °C to about 300 °C.

In one or more embodiments, if the carbon compound is sucrose or glucose, the mixing may be carried out under an acidic atmosphere. The acid may be a strong acid such as hydrochloric acid, sulfuric acid, a combination thereof.

In the mixing, a polymerization of the carbon compound occurs to form a polymer which surrounds the surface of the transition metal oxide or the transition metal hydroxide, thereby forming a thin layer.

Thereafter, the mixture is carbonized to prepare a negative active material.

The carbonization may be carried out at about 400 °C to about 900 °C, about 450 °C to about 900 °C or about 600 °C to about 900 °C. The heat treatment, i.e., carbonization may be carried out under a reduction atmosphere and the reduction atmosphere may be atmosphere of H₂, N₂, Ar, He, or a combination thereof.

According to the carbonization, the polymer thin layer is decomposed to prepare a carbon thin layer and carbon in the prepared carbon thin layer may have amorphous.

In carbonization, the transition metal oxide or the transition metal hydroxide as core is reduced to prepare a transition metal oxide of MnOₓ (x is about 1 to 2), CoO_{y} (y is about 1 to about 1.33), NiO_{y} (y is about 1 to about 1.33), FeO_{y} (y is about 1 to about 1.33), V₃O₅, V₂O₅, V₂O₃, or a combination thereof and this process may render to remove oxygen or water, thereby preparing voids. The reduction reaction mostly occurs in the core, and thus, the voids may be mostly formed in the core.

The carbonization may be carried out by increasing a temperature to a target temperature, e.g., about 400 °C to about 900 °C at an increasing rate of about 0.1 °C/minute to about 20 °C/minute, for example, about 0.1 °C/ minute to about 10°C/ minute, or about 0.1 °C/minute to about 2 °C/ minute. The increasing rate within the range may appropriately form the voids and may appropriately prepare a carbon coating layer.

### <Rechargeable lithium battery>

Another embodiment provides a rechargeable lithium battery including the negative electrode, a positive electrode, and an electrolyte.

### [Negative electrode]

The negative electrode includes a current collector and a negative active material layer including the first negative active material and the second negative active material as the negative active material on the current collector. The negative active material layer may include a binder and may further include a conductive material.

For example, the negative active material layer may include the negative active material at about 90 wt% to about 99 wt% and the binder about 1 wt% to about 10 wt%, or may include the negative active material about at about 90 wt% to about 99 wt%, the binder at about 0.5 wt% to about 5 wt%, conductive material at about 0.5 wt% to about 5 wt%.

The binder improves binding properties of negative electrode active material particles with one another and with a current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acryl rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, or a combination thereof.

The aqueous binder may be a cellulose compound, or may be the cellulose compound together with the aqueous binder. The cellulose compound refers to as a thickener, since it may impart viscosity, or it may serve a binder and thus, it may refer to as a binder. The cellulose compound may be used in an appropriate amount within the amount of the binder and it is not limited thereto. The cellulose compound includes one or more of carboxymethyl cellulose, hydroxypropylmethyl cellulose, methyl cellulose, or alkali metal salts thereof. The alkali metal may be Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material is included to provide electrode conductivity. Any electrically conductive material may be used as a conductive material unless it causes a chemical change. Examples of the conductive material may be a carbonaceous material such as natural graphite, artificial graphite, carbon black, acetylene black, ketjen black, a carbon fiber, a carbon nanofiber, carbon nanotubes, or the like; a metal-based material of a metal powder or a metal fiber including copper, nickel, aluminum, silver, or the like; a conductive polymer such as a polyphenylene derivative; or a mixture thereof.

The current collector may include a copper foil, a nickel foil, a stainless steel foil, a titanium foil, a nickel foam, a copper foam, a polymer substrate coated with a conductive metal, or a combination thereof.

### [Positive electrode]

The positive electrode may include a current collector and a positive electrode active material layer on the current collector. The positive electrode active material layer includes a positive electrode active material and may further include a binder and/or a conductive material.

For example, the positive electrode may further include an additive that may serve as a sacrificial positive electrode.

An amount of the positive active material may be, about 90 wt% to about 99.5 wt% based on 100 wt% of the positive active material layer, and amounts of the binder and the conductive material may be respectively 0.5 wt% to 5 wt% based on 100 wt% of the positive active material layer.

The positive active material may include a compound (lithiated intercalation compound) that is capable of intercalating and deintercalating lithium. In some embodiments, at least one of a composite oxide of lithium and a metal selected from cobalt, manganese, nickel, or combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

For example, the following compounds represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li _{(3-f)}Fe₂(PO₄)₃ (0≤f≤2); LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may realize high capacity and may be applied to a high-capacity, high-density rechargeable lithium battery.

The binder improves binding properties of positive electrode active material particles with one another and with a current collector. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, or the like, but are not limited thereto.

The conductive material is included to provide electrode conductivity, and any electrically conductive material may be used as a conductive material unless it causes a chemical change. Examples of the conductive material may include a carbonaceous material such as natural graphite, artificial graphite, carbon black, acetylene black, Ketjen black, carbon fiber, carbon nanofiber, carbon nanotube, or the like; a metal-based material of a metal powder or a metal fiber including copper, nickel, aluminum, silver, or the like; a conductive polymer such as a polyphenylene derivative; or a mixture thereof.

The current collector may include Al, but is not limited thereto.

### [Electrolyte]

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like.

The ester-based solvent may include methyl acetate, ethyl acetate, n-propyl acetate, dimethyl acetate, methyl propionate, ethyl propionate, decanolide, mevalonolactone, valerolactone, caprolactone, or the like.

The ether-based solvent may include dibutyl ether, tetraglyme, diglyme, dimethoxyethane, 2-methyltetrahydrofuran, 2,5-dimethyltetrahydrofuran, tetrahydrofuran, or the like. The ketone-based solvent may include cyclohexanone, or the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, or the like.

The organic solvent may be used alone or in a mixture of two or more.

If the carbonate-based solvent is used, the cyclic carbonate and the linear carbonate may be used together therewith, and the cyclic carbonate and the linear carbonate may be mixed at a volume ratio of about 1:1 to about 1:9.

The lithium salt dissolved in an organic solvent supplies a battery with lithium ions, basically operates the rechargeable lithium battery, and improves transportation of the lithium ions between positive and negative electrodes. Examples of the lithium salt include one or at least two supporting electrolyte salt selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), where x and y are an integer of 1 to 20, lithium trifluoromethane sulfonate, lithium tetrafluoroethane sulfonate, lithium difluorobis(oxalato)phosphate (LiDFBOP), lithium bis(oxalato) borate (LiBOB).

### [Separator]

A separator may be disposed between the positive electrode and the negative electrode depending on a type of a rechargeable lithium battery. The separator may use polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

The separator may include a porous substrate and a coating layer including an organic material, an inorganic material, or a combination thereof on one or both surfaces of the porous substrate.

The porous substrate may be a polymer film formed of any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acryl-based polymer.

The inorganic material may be an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and an inorganic material may be mixed in one coating layer, or a coating layer including an inorganic material may be stacked.

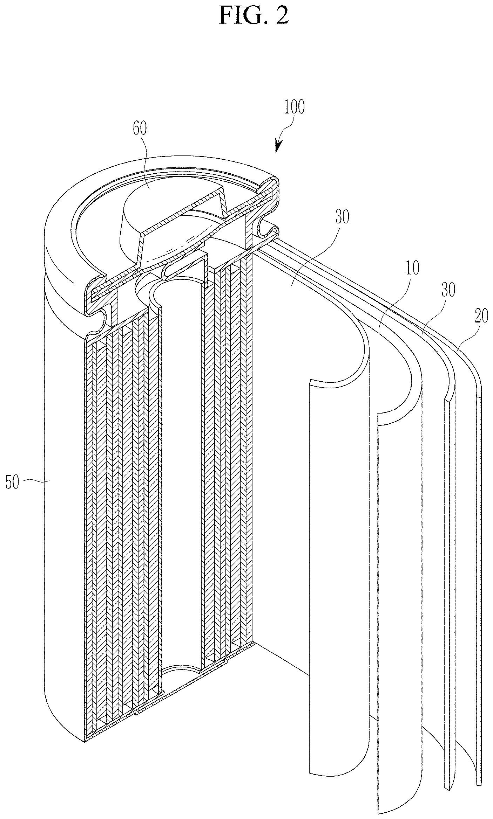

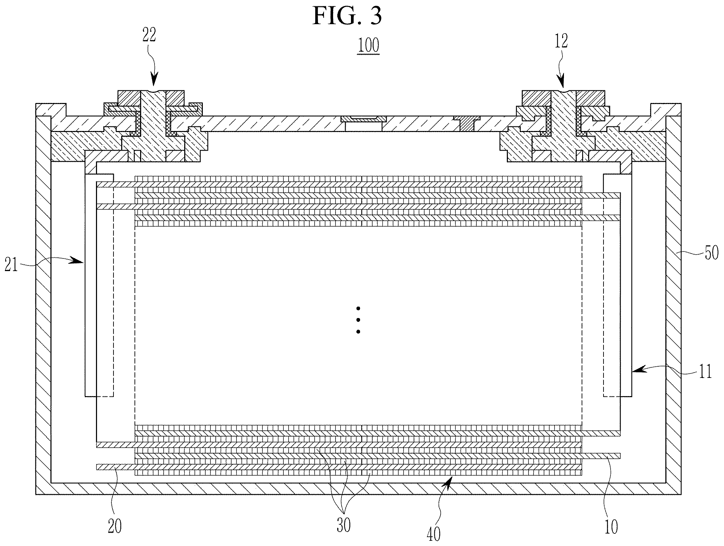

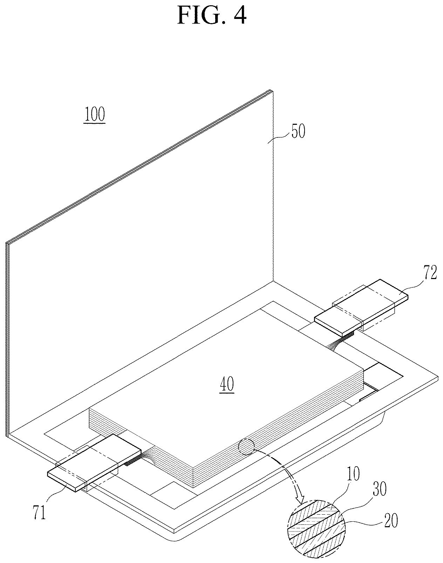

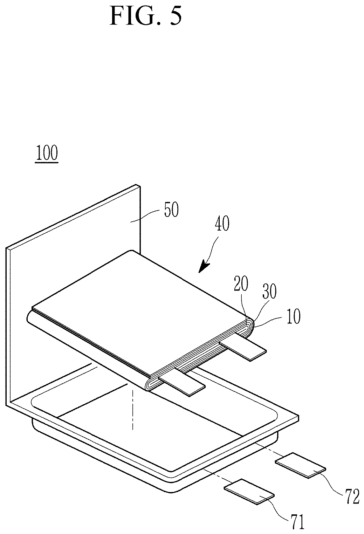

The rechargeable lithium battery may be classified into cylindrical, prismatic, pouch, or coin-type batteries, and the like depending on their shape. FIG. 2 to FIG. 5 are schematic views illustrating a rechargeable lithium battery according to an embodiment, and FIG. 2 shows a cylindrical battery, FIG. 3 shows a prismatic battery, and FIG. 4 and FIG. 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte (not shown). The rechargeable lithium battery 100 may include a sealing member 60 sealing the case 50, as shown in FIG. 2. In FIG. 3, the rechargeable lithium battery 100 may include a positive electrode lead tab 11 and a positive terminal 12, a negative electrode lead tab 21, and a negative terminal 22. As shown in FIG. 4 and FIG. 5, the rechargeable lithium battery 100 may include electrode tabs 71 and 72, which may be serving as an electrical path for inducing the current formed in the electrode assembly 40 to the outside, for example, a positive electrode tab 71 and a negative electrode tab 72.

The rechargeable lithium battery according to an embodiment may be applied to automobiles, mobile phones, and/or various types of electric devices, as non-limiting examples.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Example.

### (Example 1)

MnOOH nano rod (average length: 3000 nm) was prepared by the hydrothermal synthesis technique. The prepared MnOOH nano rod was mixed with a dopamine solution (included water as a solvent and polyoxyethylene sorbitan monooleate (Trademark: Tween80) as a buffer) in order to have a weight ratio of MnOOH and dopamine to be 80:20, thereby preparing a mixture.

In the mixing, the dopamine was polymerized to generate a polymer and this polymer was surrounded on the surface of the MnOOH nano rod, thereby preparing a thin layer (thickness: 100 nm to 200 nm).

The resulting product was carbonization heat-treated at 600 °C under an Ar atmosphere to prepare a MnOₓ (x=1 to 2) nano rod with an amorphous carbon coating layer as a first negative active material.

The porosity of the first negative active material was measured by mercury intrusion porosimetry (ISO 15901 mercury intrusion porosimetry and the results, i.e., the porosity of the first negative active material was 35 %. The thickness of the amorphous carbon coating layer measured by TEM was 15 nm and an amount of the MnOₓ (x=1 to 2) nano rod was 95 wt% based on 100 wt% of the first negative active material and an amount of the amorphous carbon coating layer was 5 wt%.

6.5 wt% of the first negative active material and 93.5 wt% of the artificial graphite were mixed to prepare a negative active material.

98 wt% of the negative active material, 1 wt% of carboxymethyl cellulose, and 1 wt% of the styrene butadiene rubber were mixed in a water solvent to prepare a negative active material layer slurry.

The negative active material layer slurry was coated on a Cu foil current collector, dried, and pressurized to prepare a negative electrode.

Using the negative electrode, a lithium metal counter electrode, and an electrolyte, a half-cell was fabricated by the general procedures. As the electrolyte, 1M LiPF₆ dissolved in a mixed solvent of ethylene carbonate, dimethyl carbonate, and ethylmethyl carbonate (mixing ratio of ethylene carbonate:dimethyl carbonate:ethylmethyl carbonate=30:40:30 volume ratio) was used.

### (Example 2)

A negative electrode and a half-cell were prepared by the same procedure as in Example 1, except for using the negative active material prepared by mixing 9 wt% of the first negative active material and 91 wt% of the artificial graphite.

### (Example 3)

A negative electrode and a half-cell were prepared by the same procedure as in Example 1, except for using the negative active material prepared by mixing 15 wt% of the first negative active material and 85 wt% of the artificial graphite.

### (Example 4)

A negative electrode and a half-cell were prepared by the same procedure as in Example 1, except for using the negative active material prepared by mixing 20 wt% of the first negative active material and 80 wt% of the artificial graphite.

### (Example 5)

A first negative active material was prepared by the same procedure as in Example 1, except that MnO₂ nano wire (average length: 1500 nm) was utilized instead of MnOOH nano rod (average length: 3000 nm). The prepared first negative active material included an amorphous carbon coating layer formed on MnOₓ (x=1 to 2) nano wire, the porosity of the first negative active material was 35 %, and the thickness of the amorphous carbon coating layer was 15 nm.

A negative electrode and a half-cell were prepared by the same procedure as in Example 1, except for using the first negative active material.

### (Example 6)

A first negative active material was prepared by the same procedure as in Example 1, except that Mn₂O₃ nano rod (average length: 2000 nm) was utilized instead of MnOOH nano rod (average length: 3000 nm). The prepared first negative active material included an amorphous carbon coating layer formed on MnOₓ (x=1 to 2) nano rod, the porosity of the first negative active material was 35 %, and the thickness of the amorphous carbon coating layer was 15 nm.

A negative electrode and a half-cell were prepared by the same procedure as in Example 1, except for using the first negative active material.

### (Example 7)

A first negative active material was prepared by the same procedure as in Example 1, except that Fe₂O₃ nano rod (average length: 400 nm) was utilized instead of MnOOH nano rod (average length: 3000 nm). The prepared first negative active material included an amorphous carbon coating layer formed on FeO_{y} (y=1 to 1.33) nano rod, the porosity of the first negative active material was 35 %, and the thickness of the amorphous carbon coating layer was 15 nm.

A negative electrode and a half-cell were prepared by the same procedure as in Example 1, except for using the first negative active material.

### (Comparative Example 1)

A negative electrode and a half-cell were prepared by the same procedure as in Example 1, except for using the negative active material prepared by mixing 0 wt% of the first negative active material and 100 wt% of the artificial graphite.

### (Comparative Example 2)

A negative electrode and a half-cell were prepared by the same procedure as in Example 1, except for using the negative active material prepared by mixing 30 wt% of the first negative active material and 70 wt% of the artificial graphite.

### Experimental Example 1) Evaluation of initial capacity

The half-cells according to Examples 1 to 7 and Comparative Example 1 were once charged and discharged at 0.1 C and a room temperature (25 °C). A ratio of discharge capacity relative to discharge capacity of Comparative Example 1 was calculated. The results are shown in Table 1, as initial capacity.

**Table 1**

| | Initial capacity (%) |
|---|---|
| Example 1 | 115% |
| Example 2 | 120% |
| Example 3 | 127% |
| Example 4 | 145% |
| Example 5 | 114% |
| Example 6 | 114% |
| Example 7 | 110% |
| Comparative Example 1 | 100 |

As shown in Table 1, Examples 1 to 7 in which the first negative active material and the second negative active material were mixed at a weight ratio of 6.5:93.5 to 20:80, exhibited higher initial capacity, compared to Comparative Example 1 including no first negative active material.

### Experimental Example 2) Evaluation of cycle-life

The half-cells according to Examples 1 to 7 and Comparative Example 2 were charged and discharged at 0.5 C for 500 cycles. A ratio of discharge capacity at 500^{th} cycle relative to a discharge capacity at 1^{st} cycle, i.e., capacity retention was calculated.

As a result, Examples 1 to 7 exhibited a capacity retention of 80 % or more, i.e., excellent cycle-life characteristic. Whereas, Comparative Example 2 using the first negative active material at a large amount exhibited capacity retention of about 74.1 % which was too low and less than 80 %, indicating it to impossible to practically use.
While this disclosure has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A negative electrode, comprising:
a current collector; and
a negative active material layer comprising a first negative active material and a crystalline carbon second negative active material at a weight ratio of more than about 0: less than about 100 to about 20:about 80, the first negative active material comprising a core comprising voids and transition metal oxide and a carbon coating layer on a surface of the core.

2. The negative electrode as claimed in claim 1, wherein in the transition metal oxide, the transition metal comprises Mn, Fe, Ni, V, Co, or a combination thereof.

3. The negative electrode as claimed in claim 1 or 2, wherein the transition metal oxide is MnOₓ (x is about 1 to about 2), CoO_{y} (y is about 1 to about 1.33), NiO_{y} (y is about 1 to about 1.33), FeO_{y} (y is about 1 to about 1.33), V₃O₅, V₂O₅, V₂O₃, or a combination thereof.

4. The negative electrode as claimed in any one of claims 1 to 3, wherein the transition metal oxide is MnOₓ (x is about 1 to about 2).

5. The negative electrode as claimed in any one of claims 1 to 4, wherein the transition metal oxide has a shape of nano wire, nano rod, or a combination thereof.

6. The negative electrode as claimed in any one of claims 1 to 5, wherein the nano wire or the nano rod has a length of about 400 nm to about 3000 nm.

7. The negative electrode as claimed in any one of claims 1 to 6, wherein a mixing ratio of the first negative active material and the second negative active material is about 1:99 to about 15:85 by weight ratio.

8. The negative electrode as claimed in any one of claims 1 to 7, wherein the first negative active material has porosity of about 15 % to about 40 %.

9. The negative electrode as claimed in any one of claims 1 to 8, wherein the voids have an average size of about 0.1 nm to about 10 nm.

10. The negative electrode as claimed in any one of claims 1 to 9, wherein the carbon coating layer has a thickness of about 1 nm to about 100 nm.

11. The negative electrode as claimed in any one of claims 1 to 10, wherein the crystalline carbon is natural graphite, artificial graphite or combination thereof.

12. The negative electrode as claimed in any one of claims 1 to 11, wherein an amount of the transition metal oxide is about 85 wt% to about 99 wt% based on 100 wt% of the first negative active material.

13. A rechargeable lithium battery, comprising:
a negative electrode as claimed in any one of claim 1 to claim 12;
a positive electrode; and
an electrolyte.
